Europäisches Patentamt

European Patent Office

Office européen des brevets

(19)

(11) Publication number: **0 105 567**

**A1**

(12) **EUROPEAN PATENT APPLICATION**

(21) Application number: **83201413.8**

(22) Date of filing: **04.10.83**

(51) Int. Cl.³: **C 01 B 17/04**
**B 01 J 2/04**

(30) Priority: **06.10.82 NL 8203872**

(43) Date of publication of application:
**18.04.84 Bulletin 84/16**

(84) Designated Contracting States:
**AT BE CH DE FR GB IT LI NL SE**

(71) Applicant: STAMICARBON B.V.
Postbus 10
NL-6160 MC Geleen(NL)

(72) Inventor: Brouwer, Adrianus Gerardus
Salviusstraat 18
NL-6141 LK Limbricht(NL)

(72) Inventor: van der Horst, Gerardus Michael Clemens
Maria
Slot Aldeborglaan 15
NL-6432 JM Hoensbroek(NL)

(74) Representative: Roeffen, Wilhelmus Johannes
Maria et al,
OCTROOIBUREAU DSM Postbus 9
NL-6160 MA Geleen(NL)

(54) Process of preparing sulphur granules.

(57) Sulphur granules are prepared by burning a gas containing sulphur compounds, converting the sulphur formed into a melt and separating this melt from the combustion mixture, spraying the melt into or onto a bed of sulphur particles kept in motion and in contact with an oxygen-containing gas stream, discharging the granules formed and recycling at least part of the gas discharged from the granulator as combustion gas.

The advantages of the present process are a substantial reduction of off-gases causing environmental pollution and also a reduction of the required amount of optionally preheated combustion gas.

EP 0 105 567 A1

## PROCESS OF PREPARING SULPHUR GRANULES

The invention relates to a process of preparing sulphur granules.

The pelletization of liquid sulphur is a well-known technique and has been described in numerous publications. From US-A-3,231,413 and CA-A-689,442, for example, it is known to prepare granular sulphur from liquid sulphur by the so-called spouted-bed granulation method. In this method, liquid sulphur is in a strong current of gas sprayed upward through a bed of sulphur particles, causing particles to be blown from the bed and fall back into the bed in a fountain the shape of an umbrella, in which process the particles grow by being coated with small quantities of solidifying liquid sulphur.

From GB-A-2,075,908 it is known to prepare sulphur granules by the so-called fluidised-bed granulation method. In this method, liquid sulphur is sprayed onto or into a bed of sulphur particles which are kept fluidised by means of a stream of gas.

Another method of granulating sulphur is the so-called spherodiser granulation, described in, for example, US-A-4,234,318 and US-A-4,213,924. In this method, a sulphur melt is sprayed onto a curtain of falling sulphur pellets, which is obtained by lifting up a bed of particles in a rotary drum by means of blades and next showering the particles down. Heat released is removed by passing a gas stream through the drum. Further, it is known to granulate sulphur by granulation in a rotary drum, see for example US-A-3,936,534. In this method, molten sulphur is sprayed onto a moving bed of sulphur particles while a gas stream is passed through the drum.

In all the processes of granulating sulphur previously mentioned, the sensible heat and the evolving heat of crystallization are wholly or in part removed with the aid of a, possibly cold, gas stream which is passed through the granulation zone. The disadvantage of these methods is that the gas stream issuing from the granulation zone is loaded with very fine sulphur dust which is extremely difficult to remove. Purging such a gas stream therefore involves serious environmental pollution.

The present invention provides a process in which it is possible to prepare sulphur granules with a very substantial reduction in the amount of sulphurdust-containing off gas, while in addition this off gas is functionally used for the preparation of the molten sulphur needed for the granulation.

According to the invention this is achieved by burning in combustion zone a gas mixture containing sulphur compounds to form a mixture containing elemental sulphur, converting the elemental sulphur to a melt, separating it out and granulating it by spraying it, in a granulation zone, into or onto a bed of sulphur particles kept in motion, there being continuous contact between the particles and an oxygen-containing gas stream, and sending at least a portion of the oxygen-containing gas stream leaving the granulation zone to the combustion zone as combustion gas.

In particular, as the gas mixture containing sulphur compounds a gas is used which contains hydrogen sulphide, and optionally sulphides and/or sulphur oxides. Such gases can be obtained in, for example, the process of wet desulphurization of industrial gases. An example of such a desulphurization process is described in Ullmanns Encyclopädie der Technischen Chemie, 3rd edition, Vol. 15 (1964), p. 506 ff. In the process of the invention, such gas mixtures are burnt in one or more stages with an oxygen-containing gas, in particular air, and burning is effected in the presence or absence of a catalyst. Various catalysts known as such can be used, for example catalysts containing aluminium oxide, see Ullmann, op. cit., p. 520 ff. Combustion yields a gaseous combustion mixture wich, besides non-converted sulphur compounds, contains mainly elemental sulphur. Preferably, this mixture is cooled to obtain liquid sulphur, which is subsequently separated out. The residual gas mixture is preferably subjected to an after-oxidation, by which the sulphur compounds present are for the greater part converted to sulphur oxides. Preferably, this oxidation is carried out with part of the oxygen-containing gas stream coming from the granulation zone. The sulphur oxides thus obtained can be separated out and at least partially sent to the combustion zone. It is also possible to send the oxidation mixture containing sulphur oxides to the combustion zone. The gas mixture freed of liquid sulphur, or the gas mixture resulting after sulphur oxides removal, may of course also be purged, whether or not after washing with water or salt solutions to remove hydrogen sulphide, sulphides and sulphur oxides.

The liquid sulphur obtained in the combustion according to the invention is subsequently granulated in a granulation zone containing sulphur particles, in the presence of an oxygen-containing stream of gas, in particular a stream of air. Various granulation techniques known as such may be used, for example drum granulation, granulation in a fluidised or spouted bed and spherodiser granulation.

The oxygen-containing gas used for the removal of the sensible heat and the evolving heat of crystallisation, which is discharged from the granulation zone, has a relatively high content of fine sulphur dust besides small amounts of hydrogen sulphide, sulphides and sulphur oxides. According to the invention, this gas is at least in part used for burning the gas mixture containing sulphur compounds. The residual portion of the gas, if any, may be purged, whether or not after a purification step for the removal of sulphur dust and sulphur compounds. It may also be used, at least in part, for the oxidation of the combustion gas mixture resulting after molten sulphur has been separated out. If there is any portion left of the gas containing sulphur dust and sulphur compounds which has been discharged from the granulation zone, it can be purged or it can be treated in a known manner, for example with an afterburner, a filter, a cyclone or a catalytic treatment, to remove sulphur dust and sulphur compounds, after which the purified gas can be purged. However, it is also possible to mix at least part of the gas discharged from the granulation zone whether or not after removal of sulphur dust with fresh-supplied oxygen-containing gas, and to send the gas mixture thus obtained to the granulation zone. With the latter mode of realisation it is possible to use air of ambient temperature as the gas stream in the granulation zone without having to preheat it, even at a low outside temperature.

The granules discharged from the granulation zone are in a known manner screened and divided into a product fraction, an undersize fraction and an oversize fraction, which latter fractions may be returned into the process by mixing them with the sulphur melt fed to the granulation zone. The oversize granules may also be crushed and used as sulphur particles in the granulation zone together with the undersize granules. These two modes of realisation may, of course, also be combined.

The sulphur particles used in the granulation zone may also be separately prepared sulphur pellets, sulphur prills being particularly suitable. These prills may be obtained by, for example, prilling part of the sulphur melt (in a relatively small tower). Also, the oversize granules obtained by screening the granulate may be melted and the melt obtained prilled.

The invention is elucidated in the following examples without being restricted thereto.

### Example

An off gas consisting of 92 per cent by weight of hydrogen sulphide, 4 per cent by weight of carbon dioxide and 4 per cent by weight of water, and having a temperature of about 50 °C, was supplied to the first compartment of a three-compartment combustion zone provided with natural-gas fired burners, at a rate of 4660 kg $H_2S$/hour. In addition, to this first compartment an air stream containing sulphur dust (see below) with a temperature of about 70 °C was supplied at a rate of 9868 kg/hour. In a natural-gas-fired burner, the gas mixture was heated to about 325 °C.

The hot gas issuing from this first compartment was cooled to about 170-175 °C, during which process liquid sulphur condensed, which was subsequently separated out.

The resulting gas mixture was heated to about 240 °C and passed over an alumina catalyst in the second compartment of the combustion zone. In this second compartment, the temperature of the gas rose to about 290 °C. The hot gas issuing from this second compartment was cooled to about 165-170 °C, during which process again liquid sulphur condensed, which was subsequently separated out.

The resulting gas mixture was heated to about 205-210 °C and passed over an alumina catalyst in the third compartment, the temperature of the gas mixture rising to about 225-230 °C. The hot gas issuing from this third compartment was cooled to about 155-165 °C, during which process again liquid sulphur condensed, which was subsequently separated out.

The resulting gas mixture was heated to about 350 °C and sent to an after-combustion zone, to which in addition 2962 kg/hour of an air stream containing sulphur dust (see below) was supplied. In this zone the gas mixture was passed over an alumina catalyst, the temperature rising to about 460 °C. The gas mixture containing sulphur dioxide which was obtained in this process was sent to an installation for the recovery of sulphur dioxide.

The liquid sulphur obtained in the combustion zone (4170 kg/hour) was at a temperature of about 165-170 °C sprayed into a rotary granulating drum to which in addition sulphur particles (temperature about 80 °C) originating from the screening and crushing section were fed. Countercurrent to the liquid sulphur, an air stream having a temperature of about 25 °C was passed through the drum, at a rate of 12,769 kg/hour. The temperature in the drum was about 80-85°C.

The sulphur granules formed were discharged from the drum at a temperature of about 82 °C and were subsequently screened into a fraction smaller than 2 mm, a product fraction of 2-4 mm, and a fraction larger than 4 mm, which latter fraction was crushed. The crushed fraction was returned to the granulating drum together with the fraction smaller than 2 mm.

From the drum, a stream of air (temperature approx. 70 °C) was discharged which contained about 0.6 per cent by weight of sulphur dust (80 kg/hour).

Of this stream, 9,868 kg/hour was sent to the first compartment of the combustion zone, while the remaining portion (2,901 kg/hour) was sent to the after-combustion zone. To the latter zone, also 61 kg of fresh air was supplied.

The above example clearly shows that it is possible to functionally use all of the S-dust-containing air from the granulator (12,769 kg/hour with 80 kg S/hour), so that the expensive purification step (e.g. filtration) may be dispensed with.
An additional advantage is that relatively warm air is supplied to the combustion zone so that less energy is required to bring the gas mixture to the desired temperature.

CLAIMS

1. Process of preparing sulphur granules, characterized in that a gas mixture containing sulphur compounds is burnt in a combustion zone to form a mixture containing elemental sulphur, the elemental sulphur is converted to a melt, this melt is separated out, and granulated, in a granulation zone, by spraying it into or onto a bed of sulphur particles kept in motion, there being continuous contact between the particles and an oxygen-containing gas stream, and at least a portion of the oxygen-containing gas stream leaving the granulation zone is sent to the combustion zone as combustion gas.

2. Process according to claim 1, characterized in that an off gas containing hydrogen sulphide and optionally other sulphides and/or sulphur oxides is used as the gas mixture containing sulphur compounds.

3. Process according to claim 1 or 2, characterized in that the sulphur compounds present in the gas mixture resulting after the molten sulphur has been separated out are converted to sulphur oxides in an oxidation zone.

4. Process according to claim 3, characterized in that the oxidation is carried out with a portion of the oxygen-containing gas stream leaving the granulation zone.

5. Process according to claim 3 of 4, characterized in that the sulphur oxides obtained in the oxidation are separated out and at least in part sent to the combustion zone.

6. Process according to any one of the claims 1-5, characterized in that an air stream is used as the oxygen-containing gas stream.

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-A-1 941 703 (MESSER GRIESHEIM) | | C 01 B 17/04 <br> B 01 J 2/04 |
| A | GB-A-1 400 632 (TEXACO) | | |
| A | NL-A-7 708 699 (EXXON) | | |
| A | FR-A-2 184 417 (RHONE-PROGIL) | | |
| A | DE-A-1 951 021 (ESSO) | | |
| A | FR-A-1 491 537 (SOC. NATIONALE DES PETROLES D'AQUITAINE) | | **TECHNICAL FIELDS SEARCHED (Int. Cl. 3)** <br><br> C 01 B 17/00 |
| D,A | US-A-4 234 318 (J.T. HIGGINS et al.) | | |
| D,A | US-A-3 936 534 (A.H. SCHALLIS) | | |
| D,A | FR-A-2 481 948 (COMP. NEERLANDAISE DE L'AZOTE) | | |
| | -/- | | |

The present search report has been drawn up for all claims

| Place of search | Date of completion of the search | Examiner |
|---|---|---|
| THE HAGUE | 21-12-1983 | STEELANDT B. |

# EUROPEAN SEARCH REPORT

**0105567**

Application number

EP 83 20 1413

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. ³) |
|---|---|---|---|
| D,A | CA-A- 689 442 (POTASSE ET ENGRAIS CHIMIQUES) --- | | |
| D,A | US-A-3 231 413 (Y.F. BERQUIN) --- | | |
| D,A | US-A-4 213 924 (A.R. SHIRLEY) ----- | | |

TECHNICAL FIELDS SEARCHED (Int. Cl. ³)

The present search report has been drawn up for all claims

| Place of search | Date of completion of the search | Examiner |
|---|---|---|
| THE HAGUE | 21-12-1983 | STEELANDT B. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82